# FASCICULE DE BREVET EUROPEEN

(11) **EP 3 250 810 B1**
(45) Date de publication et mention de la délivrance du brevet: **13.11.2019**
(21) Numéro de dépôt: 16703739.9
(22) Date de dépôt: 26.01.2016
(51) Int. Cl.: F02M 35/10, F02B 29/04, F02B 33/44, F02M 31/04

(54) **SYSTÈME D'ADMISSION D'AIR ET PROCÉDÉ DE GESTION THERMIQUE D'AIR D'ADMISSION**
LUFTANSAUGSYSTEM UND ANSAUGLUFTWÄRMEVERWALTUNGSVERFAHREN
AIR INTAKE SYSTEM AND INTAKE-AIR THERMAL MANAGEMENT METHOD

(30) Priorité: 27.01.2015 FR 1550627
(43) Date de publication de la demande: 06.12.2017
(73) Titulaire: Valeo Systèmes Thermiques, 78320 Le Mesnil Saint Denis (FR)
(72) Inventeur: AZZOUZ, Kamel, 75012 Paris (FR); SOUKEUR, Zoulika, 78190 Trappes (FR)
(74) Mandataire: Neuviale, Bertrand
(86) Numéro de dépôt international: PCT/EP2016/051599
(87) Numéro de publication internationale: WO 2016/120284

(56) Documents cités:
- CN-A- 102 359 411
- FR-A1- 2 847 004
- FR-A1- 2 982 906
- GB-A- 2 001 128

## Description

La présente invention concerne un système d'admission d'air pour moteur thermique suralimenté et son procédé de gestion thermique de l'air d'admission.

Dans des conditions climatiques froides, un moteur thermique nécessite un certain temps de chauffe avant que les gaz d'échappement aient une température suffisante pour que les dispositifs de traitement des gaz d'échappement, comme par exemple le catalyseur, puissent être complètement efficace. De plus des conditions climatiques froides peuvent entraîner des soucis de combustion lors du démarrage à froid et entraîner une surconsommation ainsi qu'une augmentation des émissions polluantes.

Une solution connue dans le cas d'un véhicule équipé d'un turbocompresseur et d'un refroidisseur d'air de suralimentation est d'utiliser ledit refroidisseur d'air de suralimentation afin de réchauffer l'air d'admission le traversant, par exemple en reliant ledit refroidisseur d'air de suralimentation à une source chaude, comme un circuit de climatisation en mode pompe à chaleur, ou encore à un circuit de refroidissement du moteur thermique ou des gaz d'échappement. Il est également possible de réchauffer l'air d'admission au moyen de dispositif d'un chauffage électrique qui par exemple chauffe le fluide caloporteur circulant dans le refroidisseur d'air de suralimentation ou bien qui chauffe directement l'air d'admission.

GB2001128A divulgue un système d'admission d'air avec un refroidisseur d'air de suralimentation et un échangeur thermique montés en parallèle. L'échangeur thermique permet de réchauffer l'air d'admission.

CN102359411A et FR2982906A1 divulguent des systèmes d'admission comportant un matériau à changement de phase.

Cependant ces diverses solutions afin de réchauffer l'air d'admission pendant le temps de chauffe du moteur thermique ont elles-mêmes besoin d'un certain temps pour se déclencher et être efficace. De plus certaines solutions comme l'utilisation de résistances électriques entraînent une consommation électrique supplémentaire notamment en provenance de l'alternateur et qui donc conduit à une surconsomation de carburant.

Un des but de la présente invention est donc de remédier au moins partiellement aux inconvénients de l'art antérieur et de proposer un système d'admission d'air amélioré ainsi que son procédé de gestion thermique de l'air d'admission.

La présente invention concerne donc un système d'admission d'air d'un moteur thermique suralimenté, ledit système d'admission d'air comportant une entrée d'air extérieur et un refroidisseur d'air de suralimentation, ledit système d'admission d'air comportant en outre une branche de contournement du refroidisseur d'air de suralimentation entre un point d'embranchement disposé en amont dudit refroidisseur d'air de suralimentation et une sortie d'air d'alimentation reliée au moteur thermique, ladite branche de contournement comportant en son sein un matériau à changement de phase, ledit système d'admission d'air comportant également un dispositif de régulation et de redirection de l'air d'admission au niveau du point d'embranchement.

Le matériau à changement de phase permet de réchauffer l'air d'admission traversant la branche de contournement lorsque qu'il passe d'un état liquide à un état solide en cédant de l'énergie calorifique.

Selon un aspect de l'invention, le matériau à changement de phase est intégré à la paroi de la branche de contournement.

Selon un autre aspect de l'invention, le matériau à changement de phase est sous forme de billes de matériau à changement de phase polymère ou encapsulé, disposées au sein de la branche de contournement entre deux dispositifs de retenues.

Selon un autre aspect de l'invention, les deux dispositifs de retenues sont respectivement disposés au niveau du point d'embranchement et de la sortie d'air d'alimentation de la branche de contournement.

Selon un autre aspect de l'invention, le matériau à changement de phase rempli jusqu'à 80 % de la section transversale de la branche de contournement.

Selon un autre aspect de l'invention, le matériau à changement de phase est un matériau à changement de phase organique, inorganique ou végétal dont la température de fusion est comprise entre 40 et 90°C.

Selon un autre aspect de l'invention, la branche de contournement est recouverte d'un matériau isolant.

La présente invention concerne également un procédé de gestion thermique d'un système d'admission d'air tel que décrit précédemment, comprenant une étape de gestion et de redirection de l'air d'admission vers le refroidisseur d'air d'admission et/ou vers la branche de contournement.

Selon un aspect du procédé de gestion thermique, ledit procédé est selon un mode dit de « refroidissement de l'air d'admission » dans lequel le dispositif de régulation et de redirection redirige l'air d'admission chaud en provenance d'un compresseur en direction du refroidisseur d'air d'admission.

Selon un aspect du procédé de gestion thermique, ledit procédé est selon un mode dit de « chauffage de l'air d'admission » dans lequel le dispositif de régulation et de redirection redirige l'air d'admission froid en provenance du compresseur en direction de la branche de contournement.

Selon un aspect du procédé de gestion thermique, ledit procédé est selon un premier mode dit de « régénération du matériau à changement de phase » dans lequel le dispositif de régulation et de redirection redirige, le temps de la fusion totale du matériau à changement de phase, l'air d'admission chaud en provenance d'un compresseur en direction de la branche de contournement.

Selon un aspect du procédé de gestion thermique, ledit procédé selon un deuxième mode dit de « régénération du matériau à changement de phase » dans lequel le dispositif de régulation et de redirection redirige, le temps de la fusion totale du matériau à changement de phase, entre 5 et 15 % de l'air d'admission chaud en provenance d'un compresseur en direction de la branche de contournement et redirige le restant vers le refroidisseur d'air de suralimentation.

Selon un aspect du procédé de gestion thermique, ledit procédé selon un troisième mode dit de « régénération du matériau à changement de phase » dans lequel le dispositif de régulation et de redirection redirige en permanence entre 1 et 5 % de l'air d'admission chaud en provenance d'un compresseur en direction de la branche de contournement et redirige le restant vers le refroidisseur d'air de suralimentation.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'un système d'admission d'air,
- la figure 2 montre une représentation schématique en coupe transversale de la branche de contournement du refroidisseur d'air de suralimentation, selon un premier mode de réalisation,
- la figure 3 montre une représentation schématique en coupe transversale de la branche de contournement du refroidisseur d'air de suralimentation, selon un deuxième mode de réalisation,

Sur les différentes figures, les éléments identiques portent les mêmes numéros de référence.

Dans la présente description, on entend par « placé en amont » qu'un élément est placé avant un autre par rapport au sens de circulation d'un fluide. A contrario, on entend par « placé en aval » qu'un élément est placé après un autre par rapport au sens de circulation du fluide.

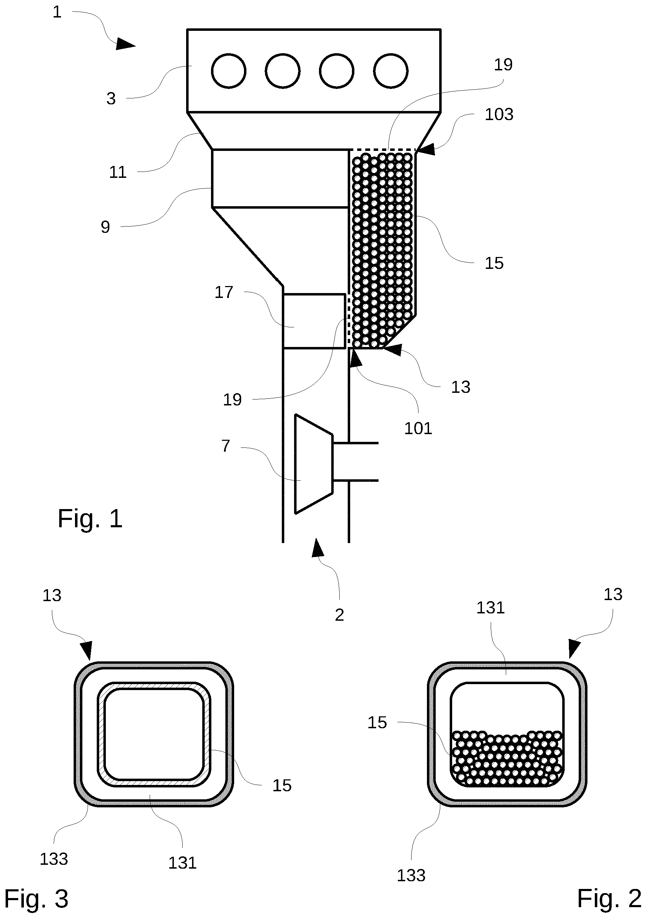

La figure 1 montre une représentation schématique d'un système d'admission d'air 1 d'un moteur thermique 3 suralimenté. Ce système d'admission d'air 1 comporte :
▪ une entrée d'air extérieur 2,
▪ un compresseur 7 qui est généralement relié à une turbine placée dans le circuit d'évacuation des gaz d'échappement, et
▪ un refroidisseur d'air de suralimentation 9 disposé en aval dudit compresseur 7, généralement accolé à un collecteur d'air d'admission 11 distribuant l'air d'admission aux cylindres du moteur thermique 3.

Le système d'admission d'air 1 comporte en outre une branche de contournement 13 du refroidisseur d'air de suralimentation 9 entre un point d'embranchement 101, disposé en amont dudit refroidisseur d'air de suralimentation 9, et une sortie d'air d'alimentation 103 reliée au moteur thermique 3. La sortie d'air d'alimentation 103 peut par exemple directement être connectée au collecteur d'air d'admission 11, comme représenté sur la figure 1, ou alors il peut simplement venir se connecter en aval du refroidisseur d'air de suralimentation 9.

Le système d'admission d'air 1 comporte également un dispositif de régulation et de redirection 17 de l'air d'admission au niveau du point d'embranchement 101. Ce dispositif de régulation et de redirection 17 de l'air d'admission peut par exemple être une vanne trois-voies permettant la redirection de l'air d'admission provenant du compresseur 7 au choix vers le refroidisseur d'air de suralimentation 9 ou vers la branche de contournement 13. Avantageusement, le dispositif de régulation et de redirection 17 peut rediriger simultanément une partie de l'air d'admission vers le refroidisseur d'air de suralimentation 9 et vers la branche de contournement 13. Le dispositif de régulation et de redirection 17 peut également comporter deux vannes de régulation, une première vanne placée sur la branche de contournement 13, au niveau du point d'embranchement 101, et une deuxième vanne de régulation placée entre ledit point d'embranchement 101 et le refroidisseur d'air de suralimentation 9.

La branche de contournement 13 comporte en son sein un matériau à changement de phase 15. Le matériau à changement de phase 15 permet de réchauffer l'air d'admission traversant la branche de contournement 13 lorsque qu'il passe d'un état liquide à un état solide en cédant de l'énergie calorifique.

Le matériau à changement de phase 15 peut notamment être un matériau à changement de phase organique, inorganique ou végétal dont la température de fusion est choisie en fonction de la température de l'air d'admission en sortie de la branche de contournement 13 désirée lorsque ledit matériau à changement de phase 15 refroidit l'air d'admission. Cette température de fusion du matériau à changement de phase 15 peut ainsi être comprise entre 40 et 90°C.

Comme le montrent les figures 1 et 2, le matériau à changement de phase 15 peut être sous forme de billes de matériau à changement de phase polymère ou encapsulé. Lesdites billes de matériau à changement de phase 15 sont disposées au sein de la branche de contournement 13 entre deux dispositifs de retenues 19. Ces dispositifs de retenues 19, par exemple des grilles dont les mailles ont une dimension inférieure à celle des billes, sont préférentiellement disposées dans la branche de contournement 13 au niveau du point d'embranchement 101 et de la sortie d'air d'admission 103.

Les billes de matériau à changement de phase 15 peuvent notamment remplir la branche de contournement 13 jusqu'à 80 % de sa section transversale afin de permettre un échange de chaleur suffisant. Les billes de matériau à changement de phase 15 ont un diamètre suffisant pour permettre le passage de l'air d'admission dans les interstices entre les billes avec une perte de charge minimale tout en ayant une grande surface d'échange.

Selon un mode de réalisation alternatif illustré à la figure 3, le matériau à changement de phase est intégré directement à la paroi 131 de la branche de contournement 13.

Il est cependant tout à fait possible d'imaginer d'autres modes de réalisation d'intégration d'un matériau à changement de phase 15 au sein de la branche de contournement 13, comme par exemple sous forme de tubes contenant ledit matériau à changement de phase 15 et disposés parallèlement les un des autres dans le sens longitudinal de la branche de contournement 13.

Afin de limiter les pertes d'énergie calorifique contenue dans le matériau à changement de phase 15, la branche de contournement peut être recouverte d'un matériau isolant 133.

La présente invention concerne également un procédé de gestion thermique du système d'admission d'air 1. Ce procédé de gestion thermique comporte notamment une une étape de gestion et de redirection de l'air d'admission vers le refroidisseur d'air d'admission 9 et/ou vers la branche de contournement 13 selon différents modes de fonctionnement.

Selon un mode dit de « refroidissement de l'air d'admission », le dispositif de régulation et de redirection 17 redirige l'air d'admission chaud en provenance du compresseur 7, en direction du refroidisseur d'air d'admission 9. Ce mode de fonctionnement correspond au fonctionnement normal du moteur thermique lorsqu'il est est à température optimale de fonctionnement. L'air d'admission en sortie du compresseur 7 peut ici atteindre 200°C et est refroidie au niveau du refroidisseur d'air de suralimentation 9.

Selon un mode dit de « chauffage de l'air d'admission », le dispositif de régulation et de redirection 17 redirige l'air d'admission froid en provenance du compresseur 7 en direction de la branche de contournement 13. Ce mode de fonctionnement correspond à un démarrage à froid où l'air en sortie du compresseur 7 n'est pas chaud. De ce fait, l'air n'a pas une température suffisante pour assurer le bon fonctionnement du moteur 3, L'air d'admission passe alors dans la branche de contournement 13 où il est réchauffé par le matériau à changement de phase 15 qui libère de l'énergie calorifique en passant d'un état liquide à un état solide. Le matériau à changement de phase 15 permet ainsi par exemple de faire passer un air extérieur à -7°C à une température minimale de 10°C à sa sortie d'air d'alimentation 103.

Selon un premier mode dit de « régénération du matériau à changement de phase » le dispositif de régulation et de redirection 17 redirige, le temps de la fusion totale du matériau à changement de phase 15, l'air d'admission chaud en provenance du compresseur 7 en direction de la branche de contournement 13.

Selon un deuxième mode dit de « régénération du matériau à changement de phase », le dispositif de régulation et de redirection 17 redirige, le temps de la fusion totale du matériau à changement de phase 15, entre 5 et 15 % de l'air d'admission chaud en provenance du compresseur 7 en direction de la branche de contournement 13 et redirige le restant vers le refroidisseur d'air de suralimentation 9.

Pour ces premier et deuxième modes dit de « régénération du matériau à changement de phase », le temps nécessaire à cette « régénération » est fonction du débit massique de l'air d'admission, de sa température, ainsi que de la masse de matériau à changement de phase 15, de sa chaleur latente et de sa conductivité thermique. Lors de ces premier et deuxième modes dit de « régénération du matériau à changement de phase », l'air d'admission chaud est tout de même refroidis du fait de la captation d'énergie calorifique par le matériau à changement de phase 15.

Selon un troisième mode dit de « régénération du matériau à changement de phase », le dispositif de régulation et de redirection 17 redirige en permanence entre 1 et 5 % de l'air d'admission chaud en provenance du compresseur 7 en direction de la branche de contournement 13 et redirige le restant vers le refroidisseur d'air de suralimentation 9.

Ces trois modes dit de « régénération du matériau à changement de phase » sont réalisés lorsque le moteur est à température optimale de fonctionnement. L'air chaud provenant du compresseur 7 permet un apport d'énergie calorifique qui est stocké au niveau du matériau à changement de phase 15 qui passe d'un état solide à un état liquide. Cette énergie calorifique stockée sera réutilisée ultérieurement lors d'un démarrage à froid pour réchauffer l'air d'admission en mode dit de « chauffage de l'air d'admission ».

Ainsi, on voit bien que le système d'admission d'air 1 permet de part la présence de la branche de contournement 13 et du matériau à changement de phase 15, un réchauffage immédiat de l'air d'admission lors d'un démarrage à froid en conditions extérieures froides. Cela permet ainsi de diminuer le temps nécessaire au moteur thermique 3 pour atteindre une température de fonctionnement optimale et donc permet également une diminution des émissions polluantes. De plus, le fait que le moteur thermique atteigne une température de fonctionnement optimale plus rapidement permet une diminution des frottements et donc une diminution de sa consommation de craburant.

## Revendications

1. Système d'admission d'air (1) d'un moteur thermique (3) suralimenté, ledit système d'admission d'air (1) comportant une entrée d'air extérieur (2), et un refroidisseur d'air de suralimentation (9), **caractérisé en ce que** ledit système d'admission d'air (1) comporte en outre une branche de contournement (13) du refroidisseur d'air de suralimentation (9) entre un point d'embranchement (101) disposé en amont dudit refroidisseur d'air de suralimentation (9) et une sortie d'air d'alimentation (103) reliée au moteur thermique (3), ladite branche de contournement (13) comportant en son sein un matériau à changement de phase (15), ledit système d'admission d'air (1) comportant également un dispositif de régulation et de redirection (17) de l'air d'admission au niveau du point d'embranchement (101).

2. Système d'admission d'air (1) selon la revendication 1, **caractérisé en ce que** le matériau à changement de phase (15) est intégré à la paroi (131) de la branche de contournement (13).

3. Système d'admission d'air (1) selon la revendication 1, **caractérisé en ce que** le matériau à changement de phase (15) est sous forme de billes de matériau à changement de phase polymère ou encapsulé, disposées au sein de la branche de contournement (13) entre deux dispositifs de retenues (19).

4. Système d'admission d'air (1) selon la revendication 3, **caractérisé en ce que** les deux dispositifs de retenues (19) sont respectivement disposés au niveau du point d'embranchement (101) et de la sortie d'air d'alimentation (103) de la branche de contournement (13).

5. Système d'admission d'air (1) selon l'une des revendications 3 ou 4, **caractérisé en ce que** le matériau à changement de phase (15) rempli jusqu'à 80 % de la section transversale de la branche de contournement (13).

6. Système d'admission d'air (1) selon l'une des revendications précédentes, **caractérisé en ce que** le matériau à changement de phase (15) est un matériau à changement de phase organique, inorganique ou végétal dont la température de fusion est comprise entre 40 et 90°C.

7. Système d'admission d'air (1) selon l'une des revendications précédentes, **caractérisé en ce que** la branche de contournement (13) est recouverte d'un matériau isolant (133) .

8. Procédé de gestion thermique d'un système d'admission d'air (1) selon l'une des revendications 1 à 7, comprenant une étape de gestion et de redirection de l'air d'admission vers le refroidisseur d'air d'admission (9) et/ou vers la branche de contournement (13).

9. Procédé de gestion thermique selon la revendication 8 selon un mode dit de « refroidissement de l'air d'admission » dans lequel le dispositif de régulation et de redirection (17) redirige l'air d'admission chaud en provenance d'un compresseur (7) en direction du refroidisseur d'air d'admission (9).

10. Procédé de gestion thermique selon la revendication 8 selon un mode dit de « chauffage de l'air d'admission » dans lequel le dispositif de régulation et de redirection (17) redirige l'air d'admission froid en provenance d'un compresseur (7) en direction de la branche de contournement (13).

11. Procédé de gestion thermique selon la revendication 8 selon un premier mode dit de « régénération du matériau à changement de phase » dans lequel le dispositif de régulation et de redirection (17) redirige, le temps de la fusion totale du matériau à changement de phase (15), l'air d'admission chaud en provenance du compresseur (7) en direction de la branche de contournement (13).

12. Procédé de gestion thermique selon la revendication 8 selon un deuxième mode dit de « régénération du matériau à changement de phase » dans lequel le dispositif de régulation et de redirection (17) redirige, le temps de la fusion totale du matériau à changement de phase (15), entre 5 et 15 % de l'air d'admission chaud en provenance d'un compresseur (7) en direction de la branche de contournement (13) et redirige le restant vers le refroidisseur d'air de suralimentation (9).

13. Procédé de gestion thermique selon la revendication 8 selon un troisième mode dit de « régénération du matériau à changement de phase » dans lequel le dispositif de régulation et de redirection (17) redirige en permanence entre 1 et 5 % de l'air d'admission chaud en provenance d'un compresseur (7) en direction de la branche de contournement (13) et redirige le restant vers le refroidisseur d'air de suralimentation (9).

## Patentansprüche

1. Luftansaugsystem (1) einer aufgeladenen Brennkraftmaschine (3), wobei das Luftansaugsystem (1) einen Außenlufteinlass (2) und einen Ladeluftkühler (9) aufweist, **dadurch gekennzeichnet, dass** das Luftansaugsystem (1) außerdem einen Zweig zur Umgehung (13) des Ladeluftkühlers (9) zwischen einem Verzweigungspunkt (101), der stromaufwärts des Ladeluftkühlers (9) angeordnet ist, und einem Ladeluftauslass (103), der mit der Brennkraftmaschine (3) verbunden ist, aufweist, wobei der Umgehungszweig (13) in seinem Inneren ein Phasenwechselmaterial (15) aufweist, wobei das Luftansaugsystem (1) auch eine Vorrichtung zur Regulierung und Umleitung (17) der Ansaugluft an dem Verzweigungspunkt (101) aufweist.

2. Luftansaugsystem (1) nach Anspruch 1, **dadurch gekennzeichnet, dass** das Phasenwechselmaterial (15) in die Wand (131) des Umgehungszweiges (13) integriert ist.

3. Luftansaugsystem (1) nach Anspruch 1, **dadurch gekennzeichnet, dass** das Phasenwechselmaterial (15) in Form von Kugeln aus polymerem oder eingekapseltem Phasenwechselmaterial vorliegt, die im Inneren des Umgehungszweiges (13) zwischen zwei Haltevorrichtungen (19) angeordnet sind.

4. Luftansaugsystem (1) nach Anspruch 3, **dadurch gekennzeichnet, dass** die zwei Haltevorrichtungen (19) am Verzweigungspunkt (101) bzw. am Ladeluftauslass (103) des Umgehungszweiges (13) angeordnet sind.

5. Luftansaugsystem (1) nach einem der Ansprüche 3 oder 4, **dadurch gekennzeichnet, dass** das Phasenwechselmaterial (15) bis zu 80 % des Querschnitts des Umgehungszweiges (13) ausfüllt.

6. Luftansaugsystem (1) nach einem der vorhergehenden Ansprüche, **dadurch gekennzeichnet, dass** das Phasenwechselmaterial (15) ein organisches, anorganisches oder pflanzliches Phasenwechselmaterial ist, dessen Schmelztemperatur zwischen 40 und 90 °C liegt.

7. Luftansaugsystem (1) nach einem der vorhergehenden Ansprüche, **dadurch gekennzeichnet, dass** der Umgehungszweig (13) mit einem Isoliermaterial (133) bedeckt ist.

8. Verfahren zum Thermomanagement eines Luftansaugsystems (1) nach einem der Ansprüche 1 bis 7, welches einen Schritt des Managements und der Umleitung der Ansaugluft zum Ladeluftkühler (9) und/oder zum Umgehungszweig (13) umfasst.

9. Verfahren zum Thermomanagement nach Anspruch 8 gemäß einer sogenannten Betriebsart der "Kühlung der Ansaugluft", in welcher die Vorrichtung zur Regulierung und Umleitung (17) die von einem Kompressor (7) kommende heiße Ansaugluft in Richtung des Ladeluftkühlers (9) umleitet.

10. Verfahren zum Thermomanagement nach Anspruch 8 gemäß einer sogenannten Betriebsart der "Erwärmung der Ansaugluft", in welcher die Vorrichtung zur Regulierung und Umleitung (17) die von einem Kompressor (7) kommende kalte Ansaugluft in Richtung des Umgehungszweiges (13) umleitet.

11. Verfahren zum Thermomanagement nach Anspruch 8 gemäß einer ersten sogenannten Betriebsart der "Regeneration des Phasenwechselmaterials", in welcher die Vorrichtung zur Regulierung und Umleitung (17), zur Zeit des vollständigen Schmelzens des Phasenwechselmaterials (15), die von dem Kompressor (7) kommende heiße Ansaugluft in Richtung des Umgehungszweiges (13) umleitet.

12. Verfahren zum Thermomanagement nach Anspruch 8 gemäß einer zweiten sogenannten Betriebsart der "Regeneration des Phasenwechselmaterials", in welcher die Vorrichtung zur Regulierung und Umleitung (17), zur Zeit des vollständigen Schmelzens des Phasenwechselmaterials (15), zwischen 5 und 15 % der von einem Kompressor (7) kommenden heißen Ansaugluft in Richtung des Umgehungszweiges (13) umleitet und den Rest zum Ladeluftkühler (9) umleitet.

13. Verfahren zum Thermomanagement nach Anspruch 8 gemäß einer dritten sogenannten Betriebsart der "Regeneration des Phasenwechselmaterials", in welcher die Vorrichtung zur Regulierung und Umleitung (17) ständig zwischen 1 und 5 % der von einem Kompressor (7) kommenden heißen Ansaugluft in Richtung des Umgehungszweiges (13) umleitet und den Rest zum Ladeluftkühler (9) umleitet.

## Claims

1. Air intake system (1) for a forced-induction heat engine (3), said air intake system (1) comprising an outside air inlet (2) and an intercooler (9), **characterized in that** said air intake system (1) further comprises a bypass line (13) for bypassing the intercooler (9), between a connection point (101) arranged upstream of said intercooler (9) and a charge air outlet (103) connected to the heat engine (3), said bypass line (13) comprising within it a phase-change material (15), said air intake system (1) also comprising a device (17) for regulating and redirecting the intake air at the connection point (101) .

2. Air intake system (1) according to Claim 1, **characterized in that** the phase-change material (15) is integrated into the wall (131) of the bypass line (13) .

3. Air intake system (1) according to Claim 1, **characterized in that** the phase-change material (15) is in the form of balls of polymer or encapsulated phase-change material, these balls being arranged within the bypass line (13), between two retention devices (19).

4. Air intake system (1) according to Claim 3, **characterized in that** the two retention devices (19) are respectively arranged at the connection point (101) and at the charge air outlet (103) of the bypass line (13).

5. Air intake system (1) according to either of Claims 3 and 4, **characterized in that** the phase-change material (15) fills up to 80% of the cross section of the bypass line (13).

6. Air intake system (1) according to one of the preceding claims, **characterized in that** the phase-change material (15) is an organic, inorganic or vegetable phase-change material whose melting point is between 40 and 90°C.

7. Air intake system (1) according to one of the preceding claims, **characterized in that** the bypass line (13) is covered with an insulating material (133) .

8. Method for thermal management of an air intake system (1) according to one of Claims 1 to 7, comprising a step of managing and redirecting the intake air to the intercooler (9) and/or to the bypass line (13).

9. Thermal management method according to Claim 8, in an "intake air cooling" mode, in which the regulating and redirecting device (17) redirects the hot intake air coming from a compressor (7) towards the intercooler (9).

10. Thermal management method according to Claim 8, in an "intake air heating" mode, in which the regulating and redirecting device (17) redirects the cold intake air coming from a compressor (7) towards the bypass line (13).

11. Thermal management method according to Claim 8, in a first "phase-change material regeneration" mode, in which the regulating and redirecting device (17) redirects, until all of the phase-change material (15) has melted, the hot intake air coming from the compressor (7) towards the bypass line (13).

12. Thermal management method according to Claim 8, in a second "phase-change material regeneration" mode, in which the regulating and redirecting device (17) redirects, until all of the phase-change material (15) has melted, between 5 and 15% of the hot intake air coming from a compressor (7) towards the bypass line (13) and redirects the remainder towards the intercooler (9).

13. Thermal management method according to Claim 8, in a third "phase-change material regeneration" mode, in which the regulating and redirecting device (17) always redirects between 1 and 5% of the hot intake air coming from a compressor (7) towards the bypass line (13) and redirects the remainder towards the intercooler (9).
